# EUROPEAN PATENT SPECIFICATION

(11) **EP 3 096 542 B1**
(45) Date of publication and mention of the grant of the patent: **09.08.2023**
(21) Application number: 15168026.1
(22) Date of filing: 18.05.2015
(51) Int. Cl.: H04W 4/90, H04W 76/16, H04W 76/50, H04W 36/08, H04W 36/14

(54) **METHOD FOR IMPROVED HANDLING OF EMERGENCY CALLS OF A USER EQUIPMENT BEING CONNECTED TO A WIRELESS ACCESS POINT, WHILE INITIATING AN EMERGENCY CALL, SYSTEM FOR IMPROVED HANDLING OF EMERGENCY CALLS, MOBILE COMMUNICATION NETWORK FOR IMPROVED HANDLING OF EMERGENCY CALLS, USER EQUIPMENT, WIRELESS ACCESS POINT, PROGRAM AND COMPUTER PROGRAM PRODUCT**
VERFAHREN ZUR VERBESSERTEN HANDHABUNG VON NOTRUFEN EINES BENUTZERGERÄTS, DAS BEI DER INITIIERUNG EINES NOTRUFS MIT EINEM DRAHTLOSEN ZUGANGSPUNKT VERBUNDEN IST, SYSTEM ZUR VERBESSERTEN HANDHABUNG VON NOTRUFEN, MOBILKOMMUNIKATIONSNETZWERK FÜR VERBESSERTE HANDHABUNG VON NOTRUFEN, BENUTZERGERÄT, DRAHTLOSER ZUGANGSPUNKT, PROGRAMM UND COMPUTERPROGRAMMPRODUKT
PROCÉDÉ POUR TRAITEMENT AMÉLIORÉ DES APPELS D'URGENCE D'UN ÉQUIPEMENT UTILISATEUR ÉTANT RELIÉ À UN POINT D'ACCÈS SANS FIL TOUT EN LANÇANT UN APPEL D'URGENCE, SYSTÈME POUR TRAITEMENT AMÉLIORÉ DES APPELS D'URGENCE, RÉSEAU DE COMMUNICATION MOBILE POUR UNE GESTION AMÉLIORÉE D'APPELS D'URGENCE, ÉQUIPEMENT UTILISATEUR, POINT D'ACCÈS SANS FIL, PROGRAMME INFORMATIQUE ET PRODUIT LOGICIEL

(43) Date of publication of application: 23.11.2016
(73) Proprietor: Deutsche Telekom AG, 53113 Bonn (DE)
(72) Inventor: Melander, Mari, 53111 Bonn (DE); Ververgaert, Rene, 53177 Bonn (DE); Debelts, Holger, 53227 Bonn (DE); Schweflinghaus, Georg, 53639 Königswinter (DE); Nenner, Karl-Heinz, 53332 Bornheim (DE); Zarri, Michele, London, NW2 5EN (GB)
(74) Representative: Schwöbel, Thilo K.

(56) References cited:
- US-A1- 2007 032 219
- US-A1- 2008 009 262
- US-A1- 2010 297 979
- US-A1- 2011 171 926
- Brown Gabriel: "White Paper Integration of Carrier Wi-Fi Into the Mobile Packet Core Strategic Value of Carrier Wi-Fi Service Provider Wi-Fi: Driven by Demand", , 1 September 2012 (2012-09-01), pages 1-15, XP055873488, Retrieved from the Internet: URL:http://go.radisys.com/rs/radisys/image s/paper-lte-wifi-epc.pdf [retrieved on 2021-12-15]

## Description

### BACKGROUND

The present invention relates a method for improved handling of emergency calls of a user equipment being connected to a wireless access point while initiating an emergency call, wherein the user equipment is able to be connected to a mobile communication network via the wireless access point that is connected to an external packet data network, wherein the wireless access point is a WiFi access point.

Furthermore, the present invention relates to a a system for improved handling of emergency calls of a user equipment being connected to a wireless access point while initiating an emergency call, wherein the user equipment is able to be connected to a mobile communication network via the wireless access point that is connected to an external packet data network.

Additionally, the present invention relates to a user equipment, to a program and to a computer program product for improved handling of emergency calls.

The present invention generally relates to user equipments attaching to a mobile communication network via wireless local area networks (WLANs), also called WiFi access, to the mobile communication network, and, especially to supporting emergency calls for such user equipments in situations where these user equipments are connected to the mobile communication network using a WLAN access or a WiFi access, i.e. in a situation the user equipment is connected to the mobile communication network via a wireless access point.

Existing wireless personal area networks (WPANs) or WLANs (Wireless Local Area Networks) traditionally do not have to support emergency calls as it is the case for cellular networks or mobile communication networks. Support for emergency calls involves many aspects across all communication layers, especially signaling support and mandated procedures. The increased use of Voice over Internet Protocol (VoIP) in WLANs increases the need to also support emergency calls in WLAN-connected (or WiFi-connected) situations of user equipments. However, it typically cannot be guaranteed that an emergency call is able to be initiated by a user equipment in the sense that a specific user equipment, being in such a situation of being connected to a core network via a wireless access point, typically is not aware about whether the emergency call can be initiated via the wireless access point or not. This typically leads to the situation that - in an emergency situation, i.e. with the necessity to place an emergency call right away - precious time is wasted in trying, in a first step, to initiate the emergency call via the wireless access point only to discover that the connected core network does not support emergency calls in WiFi access situations, and, in a second step, to either reselect to a different access technology to place the emergency call in the same network or to try to attempt the emergency call using a different network.

In a related context, document US 2011/0171926 A1 addresses the problem that when emergency calls are placed via femtocells, the femtocell may not be able to guarantee sufficiently reliable emergency services. This problem is solved by sending an "Emergency Calls Supported Indicator" to the user equipment which may then decide to select a macrocell instead.

### SUMMARY

An object of the present invention is to provide an effective and simple solution to avoid situations as described above, i.e. to assure that a user equipment can place an emergency call as quickly as possible even in case that the user equipment is connected to a mobile communication network (or core network of a mobile communication network) via a WiFi access point.

The object of the present invention is achieved by a method according to claim 1.

It is thereby advantageously possible according to the present invention to provide the emergency call capability information to the user equipment such that the user equipment knows about the possibility (or not) to be able to (successfully) initiate an emergency call in a situation when the user equipment is connected to the mobile communication network (or the core network thereof). It is to be understood that typically, the emergency call capability information refers to the capability to initiate or place - for a given user equipment - an emergency call when connected to the mobile communication network via any wireless access point (that is able to be used with the considered mobile communication network), i.e. typically whether it is possible for a user equipment to place an emergency call when connected to a wireless access point (or whether this is not possible) is a property of the mobile communication network (or defined within the mobile communication network) and is typically applied to each (at least within a certain part of the mobile communication network) of the different (normally many) wireless access points that provide access to the mobile communication network. Furthermore, the transmission of the emergency call capability information towards the user equipment is typically not dependent on the user equipment having (at the moment of the transmission of this information) access to the mobile communication network via the wireless access point (i.e. the one used when placing the emergency call) or via another (of the plurality of wireless access point that are possible within the mobile communication network) wireless access point.

According to the present invention, the emergency call capability information essentially consists of one bit of information, i.e. the value of the emergency call capability information typically
-- either indicates that the mobile communication network provides the possibility of an emergency call service towards the user equipment while this user equipment is connected to the mobile communication network via the wireless access point,
-- or indicates that the mobile communication network is unable to provide the possibility of an emergency call service towards such a user equipment (i.e. being connected to the mobile communication network via the wireless access point).

In the second step according to the present invention, i.e. after the emergency call capability information has been transmitted to the user equipment, the user equipment will - dependent on the value of the emergency call capability information, i.e. whether or not it indicates that the mobile communication network provides the possibility of an emergency call service towards the user equipment while this user equipment is connected via the wireless access point to the core network - either initiate (or place) the emergency call via the wireless access point (in case the emergency call capability information indicates that this is possible) or refrain from doing so (in case the emergency call capability information indicates that this is not possible), i.e. in the latter case, in order to initiate an emergency call, the user equipment uses a different access to the mobile communication network (i.e. different to using the wireless access point), e.g. via a 2G access network (second generation or GSM (Global System for Mobile Communication) access network) and/or via a 3G access network (third generation or UMTS (Universal Mobile Telecommunication System) access network) and/or via a 4G access network (fourth generation or LTE (Long Term Evolution) access network).

According to the present invention, the user equipment is connected - while initiating the emergency call - via the wireless access point to the mobile communication network using a data transmission tunnel between the user equipment and an evolved packet data gateway that is part of the core network.

By means of using the data transmission tunnel, especially an IPSec-tunnel, it is advantageously possible according to the present invention that the security level of the connection, via the wireless access point, of the user equipment to the mobile communication network (or the (packet) core network of the mobile communication network) is comparable to a connection of the user equipment via a classical 2G/3G/4G access to the core network via an access network dedicated to be used with the mobile communication network.

According to a further embodiment of the present invention, it is also possible and preferred that the emergency call capability information is transmitted to the user equipment during performing an attach procedure in order to be attached to the mobile communication network, especially during performing the LTE attach procedure and especially during performing the attach procedure involving the evolved packet data gateway and the wireless access point or a different wireless access point.

According to the present invention, it is thereby advantageously possible that the emergency call capability information is transmitted to the user equipment right from the beginning of being connected (or attached) to the mobile communication network. In this respect, the attachment of the user equipment (during which the emergency call capability information is transmitted to the user equipment) can either be performed via a classical 2G/3G/4G access to the mobile communication network, i.e. via an access network different to the wireless access point. Alternatively, the emergency call capability information can be transmitted to the user equipment during an attachment procedure of the user equipment to the mobile communication network when the wireless access point serves as access network (or provides the functionality of the access network) to the mobile communication network.

According to the present invention it is furthermore preferred that the emergency call capability information is transmitted to the user equipment during initiating the data transmission tunnel between the wireless access point and the evolved packet data gateway.

According to the present invention, it is thereby advantageously possible that the emergency call capability information is transmitted to the user equipment even prior to the completion of the attachment procedure to the mobile communication network.

Furthermore, the present invention relates to a system according to claim 7.

Thereby, it is advantageously possible to provide a system such that the user equipment knows about the possibility (or not) to be able to (successfully) initiate an emergency call in a situation when the user equipment is connected to the mobile communication network (or the core network thereof) via a WiFi access point.

Furthermore, the present invention relates to a user equipment according to claim 8 to a program according to claim 9 and to a computer program product according to claim 10.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

**Figure 1** schematically illustrates a mobile communication network and a system according to the present invention, comprising a packet data core network, at least one access network as well as a wireless access point connected to the mobile communication network, wherein the wireless access point is able to connect a user equipment to the mobile communication network.
**Figure 2** schematically illustrates a communication diagram between the user equipment, the mobile communication network, and the wireless access point, wherein the transmission of the emergency call capability information to the user equipment is shown in view of initiating an emergency call.
**Figur 3** schematically shows an attach procedure to the mobile communication network (especially to the mobile packet core network of the mobile communication network) using a wireless access point and an evolved packet data gateway.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

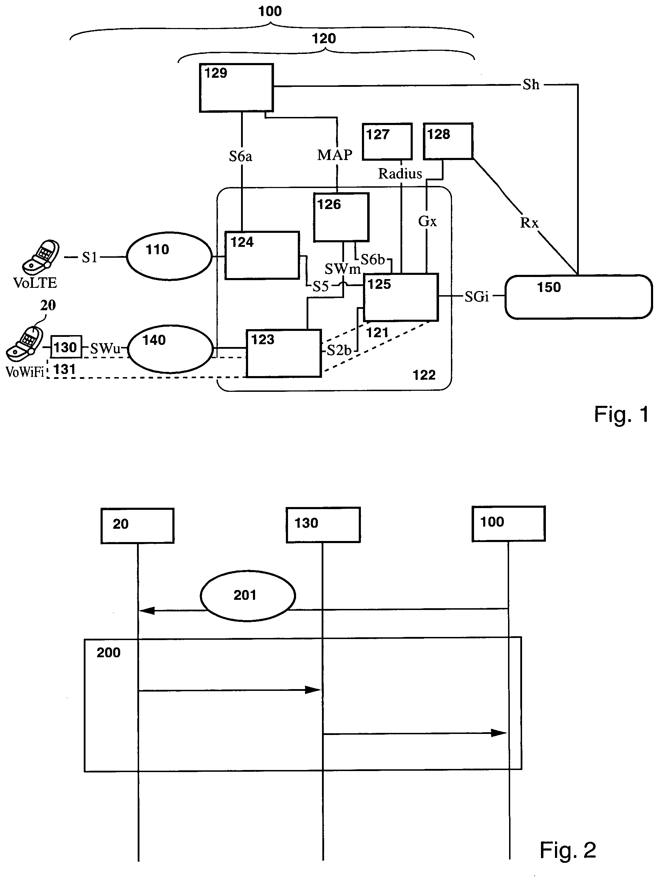

In Figure 1, a mobile communication network 100 and a system according to the present invention is schematically shown. The mobile communication network 100 comprises an access network 110 (or a 3GPP radio access network 110) and a core network 120. Alternatively to the access network 110 (or 3GPP radio access network 110) for providing access to the mobile communication network 100, the mobile communication network 100 comprises (or is assigned or is related to) a least one wireless access point 130 but in reality typically a plurality of wireless access points 130. For the sake of simplicity, only one wireless access point 130 is represented in Figure 1. Typically, the wireless access point 130 is connected to an external packet data network 140.

The core network 120 comprises a packet data core network 122 as well as a home location register / home subscriber server (HLR/HSS) 129, an authentication, authorization, and accounting node (AAA) 127, a policy and charging rules function (PCRF) 128. The packet data core network 122 comprises network nodes related to the 3GPP access network 110, especially one mobility management entity (MME) 124 or a plurality of mobility management entities (MME) 124 (typically for different geographical areas or parts of the mobile communication network 100). In the exemplary representation of Figure 1, only one mobility management entity (MME) 124 is shown. Furthermore, the packet data core network 122 also comprises a PDN-gateway entity 125 or a packet data network gateway 125 (PGW - Packet Data Network (PDN) Gateway). A user equipment having access to the mobile communication network 100 via the access network 110 (or 3GPP access network 110) and via the mobility management entity 124 is typically connected via the packet data network gateway 125 to an IP Multimedia Subsystem (IMS) 150. The packet data core network 122 furthermore comprises an evolved packet data gateway 123, and an authentication, authorization, and accounting node regarding WiFi access (Wifi-AAA) 126. Alternatively to using the 3GPP access network 110, it is possible for a user equipment 20 to be connected to the mobile communication network 100 via the wireless access point 130 (and via the external packet data network 140). In this latter case, a data transmission tunnel 131 - typically by means of an IPSec tunnel - is established between the user equipment 20 on the one hand and the evolved packet data gateway 123 on the other hand. Furthermore, an IP transportation tunnel 121 is established between the evolved packet data gateway 123 and the packet data network gateway 125. The interfaces as indicated in Figure 1 are typically provided between the different elements of the mobile communication network 100, and especially the different elements of the data core network 122. For example, an SWu interface is provided between the wireless access point 130 and the evolved packet data gateway 123 (via the external packet data network 140); an S2b interface is provided between the evolved packet data gateway 123 and the packet data network gateway 125; a SWm interface is provided between the evolved packet data gateway 123 and the WiFi-AAA 126; a S6b interface is provided between the packet dta network gateway 125 and the WiFi-AAA 126, and a SGi interface is provided between the packet data network gateway 125 and the IP Multimedia Subsystem (IMS) 150.

In Figure 2, a communication diagram between the user equipment 20, the mobile communication network 100, and the wireless access point 130 is schematically shown, wherein the transmission of the emergency call capability information 201 to the user equipment 20 is shown in view of initiating an emergency call. The emergency call capability information 201 is essentially at least one bit of information, i.e. the value of the emergency call capability information 201 typically
-- either indicates that the mobile communication network 100 provides the possibility of an emergency call service towards the user equipment 20 while this user equipment 20 is connected to the mobile communication network 100 via the wireless access point 130,
-- or indicates that the mobile communication network 100 is unable to provide the possibility of an emergency call service towards such a user equipment 20 (i.e. being connected to the mobile communication network 100 via the wireless access point 130). The emergency call capability information 201 necessarily needs to be transmitted to the user equipment 20 prior to the initiation of an emergency call 200 by that user equipment 20 (while connected to the mobile communication network 100 via the wireless access point 130). However, according to the present invention, the emergency call capability information 201 is either transmitted to the user equipment 20 during the attachment procedure of the user equipment 20 to the mobile communication network 100 or at a later moment (while the user equipment 20 is connected to the mobile communication network 100).

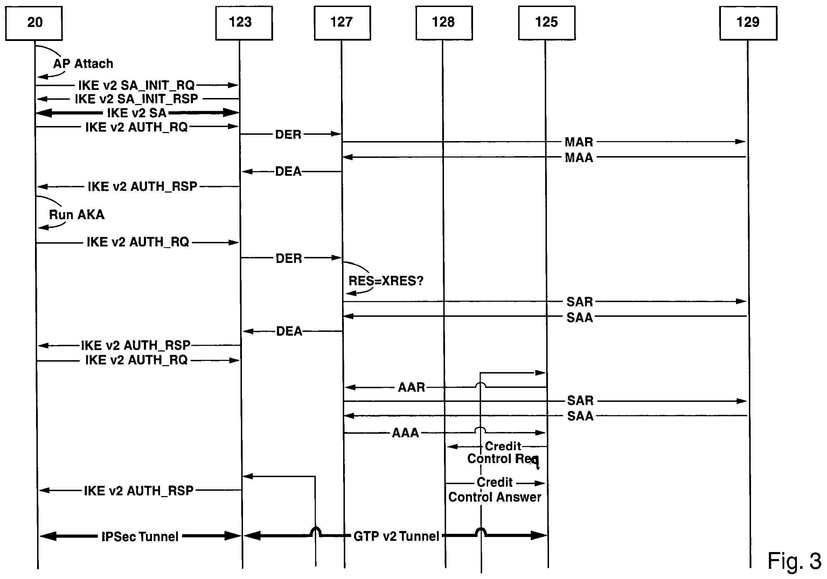

In Figure 3, an attach procedure of the user equipment 20 to the mobile communication network 100 (especially to the mobile packet core network 122 of the mobile communication network 100) using a wireless access point 130 and an evolved packet data gateway 123 is schematically shown. Figure 3 corresponds to a communication diagram between the user equipment 20, the evolved packet data gateway 123, the authentication, authorization, and accounting node (AAA) 127, the policy and charging rules function (PCRF) 128, the packet data network gateway 125, and the home location register / home subscriber server (HLR/HSS) 129. In a first processing step, the user equipment 20 attaches to the wireless access point 130, indicated in Figure 3 by means of "AP attach". In a second processing step, the user equipment 20 transmits a IKEv2 SA_INIT_RQ message to the evolved packet data gateway 123, requesting the initiation of an IPSec tunnel. In a third processing step, the evolved packet data gateway 123 transmits a IKEv2 SA_INIT RSP message to the user equipment 20, which results in the establishment of a security association between the user equipment 20 and the evolved packet data gateway 123, indicated by the double arrow "IKEv2 SA" in Figure 3. In a fourth processing step, the user equipment 20 transmits a IKEv2 Auth_RQ (authentication request) to the evolved packet data gateway 123. In a fifth processing step, the evolved packet data gateway 123 transmits a DER (Diameter EAP (Extensible Authentication Protocol) Request) to the authentication, authorization, and accounting node (AAA) 127. In a sixth processing step, the authentication, authorization, and accounting node (AAA) 127 transmits a MAR (Multimedia Authentication Request) to the home location register / home subscriber server (HLR/HSS) 129. In a seventh processing step, the home location register / home subscriber server (HLR/HSS) 129 transmits a MAA (Multimedia Authentication Answer) to the authentication, authorization, and accounting node (AAA) 127. In an eighth processing step, the authentication, authorization, and accounting node (AAA) 127 sends a DEA (Diameter EAP Answer) to the evolved packet data gateway 123. In a ninth processing step, the evolved packet data gateway 123 transmits an IKEv2 AUTH_RSP (authentication response) to the user equipment 20. In a tenth processing step, the user equipment 20 runs an Authentication and Key Agreement protocol (AKA). In an eleventh processing step, the user equipment 20 transmits a IKEv2 AUTH_RQ (authentication request) to the evolved packet data gateway 123. In a twelfth processing step, the evolved packet data gateway 123 transmits a DER to the authentication, authorization, and accounting node (AAA) 127. In a thirteenth processing step, the authentication, authorization, and accounting node (AAA) 127 runs a verification step, indicated by "RES=XRES?" in Figure 1. In a fourteenth processing step, the authentication, authorization, and accounting node (AAA) 127 transmits a SAR message (Server Assignment Request) to the home location register / home subscriber server (HLR/HSS) 129. In a fifteenth processing step, the home location register / home subscriber server (HLR/HSS) 129 transmits a SAA message (Server Assignment Answer) to the authentication, authorization, and accounting node (AAA) 127. In a sixteenth processing step, the authentication, authorization, and accounting node (AAA) 127 transmits a DEA to the evolved packet data gateway 123. In a seventeenth processing step, the evolved packet data gateway 123 transmits a IKEv2 AUTH_RSP (authentication response) to the user equipment 20. A further IKEv2 AUTH_RQ (authentication request) from the user equipment 20 to the evolved packet data gateway 123 triggers further processing steps indicated in Figure 3 that result in a further IKEv2 AUTH_RSP message from the evolved packet data gateway 123 to the user equipment 20 until both the data transmission tunnel 131 (IPSec Tunnel) between the user equipment 20 and the evolved packet data gateway 123, and the IP transportation tunnel 121 between the evolved packet data gateway 123 and the packet data network gateway 125 is established.

According to the present invention, the user equipment 20 uses an existing WiFi connection (to a wireless access point 130) to create an IPSec tunnel to the evolved packet data gateway 123 (i.e. a network element in the mobile operator domain). Via the evolved packet data gateway 123 (or ePDG), the user equipment 20 can connect to the Mobile Enhanced Packet Core (EPC) 122 and register to IMS 150 for multimedia telephony services. According to the present invention, WiFi Emergency Call (i.e. the possibility for a user equipment 20 to initiate an emergency call while connected via a wireless access point 130) requires support from both the user equipment 20 and the mobile communication network 100. According to the present invention, it can be assured that before an attempt (of an emergency call) is made, the user equipment 20 is aware that such functionality is supported in by the mobile communication network 100. Trying WiFi Emergency Call in a mobile communication network 100 not supporting this functionality will result in a failure with highly undesirable consequences. According to the present invention, it is advantageously possible to provide a dynamic procedure for the user equipment 20 to discover whether or not the mobile communication network 100 to which it is connected via WiFi (i.e. via the wireless access point 130) supports WiFi Emergency Calls or not. Furthermore, it is advantageously possible to provide a behaviour of the user equipment 20 whereby the user equipment 20 will try to re-select a different network or a different radio access technologiy rather than attempting a WiFi Emergency Call, if the mobile communication network 100 has indicated that WiFi Emergency Calls are not supported. According to the present invention, upon the connection to a mobile communication network 100 using WiFi access (i.e. access via a wireless access point 130) as one alternative of perhaps different access possibilities, the user equipment 20 receives an indication (by means of the emergency call capability information 201) from the mobile communication network 100 as to whether WiFi Emergency Call capability is supported or not. This indication may be sent at initial attach or at any time prior the user equipment 20 attempts an emergency call over WiFi.

If the mobile communication network 100 does not indicate the support of WiFi emergency calls or if the mobile communication network 100 indicates that it does not support WiFi emergency calls, then the user equipment 20 will not attempt to initiate a WiFi Emergency Call and will instead attempt to either select a different radio access technology or a different network.

A possible realization of the invention is that the user equipment 20 discovers the network WiFi Emergency Call capability (i.e. receives the emergency call capability information 201) during the LTE attach procedure.

According to the present invention, it is possible that the IKEv2 protocol is used to transmit the emergency call capability information 201 (i.e. the WiFi Emergency Call capability indication), e.g. the Notify payload in the IKE SA_INIT response sent from the evolved packet data gateway 123 (ePDG) to the user equipment 20 can be used for indicating the WiFi Emergency Call capability (emergency call capability information 201) in the Notify payload section of the message.

## Claims

1. Method for improved handling of emergency calls of a user equipment (20) being connected to a wireless access point (130) while initiating an emergency call (200), wherein the user equipment (20) is able to be connected to a mobile communication network (100) via the wireless access point (130) that is connected to an external packet data network (140), the mobile communication network (100) comprising a core network (120) and a radio access network (110), wherein the core network (120) is a mobile enhanced packet core network (122) and the access point (130) is a WiFi access point, wherein the method comprises a first and a second step:
-- in the first step, the user equipment (20) - while being attached to the mobile communication network (100) - receives an emergency call capability information (201), the emergency call capability information (201) being indicative of the mobile communication network (100) providing the possibility of an emergency service towards the user equipment (20) in case it is connected to the core network (120) via the wireless access point (130),
-- in the second step and in case that an emergency call (200) needs to be initiated by the user equipment (20) while the user equipment (20) is attached to the mobile communication network (100) via the wireless access point (130), the user equipment (20) initiates the emergency call (200) via the wireless access point (130) in case that the emergency call capability information (201) indicates that the mobile communication network (100) provides the possibility of an emergency service towards the user equipment (20) while being connected to the core network (120) via the wireless access point (130), wherein the user equipment is connected - while initiating the emergency call - via the wireless access point to the mobile communication network using a data transmission tunnel between the user equipment and an evolved packet data gateway that is part of the core network,
and the user equipment (20) initiates the emergency call (200) using an access network of the mobile communication network (100) different from an access network comprising the wireless access point (130) in case that the emergency call capability information (201) indicates that the mobile communication network (100) is unable to provide the possibility of an emergency service towards the user equipment (20) that is connected to the core network (120) via the wireless access point (130).

2. Method according to one of the preceding claims, wherein the emergency call capability information (201) is transmitted to the user equipment (20) during performing an attach procedure in order to be attached to the mobile communication network (100), especially during performing an LTE attach procedure and especially during performing the attach procedure involving the evolved packet data gateway (123) and the wireless access point (130) or a different wireless access point.

3. Method according to one of the preceding claims, wherein the emergency call capability information (201) is transmitted to the user equipment (20) during initiating the data transmission tunnel (131) between the wireless access point (130) and the evolved packet data gateway (123).

4. Method according to one of the preceding claims, wherein the emergency call capability information (201) is transmitted to the user equipment (20) after performing the attach procedure - especially the attach procedure involving the wireless access point (130) or a different wireless access point - in order to be attached to the mobile communication network (100) and/or after initiating the data transmission tunnel (131) between the wireless access point (130) and the evolved packet data gateway (123).

5. Method according to one of the preceding claims, wherein the data transmission tunnel (131) is an IP Sec Tunnel.

6. Method according to one of the preceding claims, wherein the user equipment (20) is connected to the mobile communication network (100) via the wireless access point (130) using an IP transportation tunnel (121) between the evolved packet data gateway (123) and a packet data network gateway (125) that is part of the core network (120).

7. System for improved handling of emergency calls of a user equipment (20) being connected to a wireless access point (130) while initiating an emergency call (200), wherein the system comprises a mobile communication network (100), the wireless access point (130) and the user equipment (20), wherein the user equipment (20) is able to be connected to the mobile communication network (100) via the wireless access point (130) that is connected to an external packet data network (140), the mobile communication network (100) comprising a core network (120) and a radio access network (110), wherein the core network (120) is a mobile enhanced packet core network (122) and the access point (130) is a WiFi access point, wherein
-- the user equipment (20) - while being attached to the mobile communication network (100) - receives an emergency call capability information (201), the emergency call capability information (201) being indicative of the mobile communication network (100) providing the possibility of an emergency service towards the user equipment (20) in case it is connected to the core network (120) via the wireless access point (130),
-- in case that an emergency call (200) needs to be initiated by the user equipment (20) while the user equipment (20) is attached to the mobile communication network (100) via the wireless access point (130), the user equipment (20) initiates the emergency call (200) via the wireless access point (130) in case that the emergency call capability information (201) indicates that the mobile communication network (100) provides the possibility of an emergency service towards the user equipment (20) while being connected to the core network (120) via the wireless access point (130), wherein the user equipment is connected - while initiating the emergency call - via the wireless access point to the mobile communication network using a data transmission tunnel between the user equipment and an evolved packet data gateway that is part of the core network,
and the user equipment (20) initiates the emergency call (200) using an access network of the mobile communication network (100) different from an access network comprising the wireless access point (130) in case that the emergency call capability information (201) indicates that the mobile communication network (100) is unable to provide the possibility of an emergency service towards the user equipment (20) that is connected to the core network (120) via the wireless access point (130).

8. User equipment (20) for improved handling of emergency calls of the user equipment (20) being connected to a wireless access point (130) while initiating an emergency call (200), the user equipment (20) being configured to conduct a method according to one of claims 1 to 6.

9. Program comprising a computer readable program code which, when executed in a system according to claim 7, causes the system to perform a method according one of claims 1 to 6.

10. Computer program product for improved handling of emergency calls of a user equipment (20) that is connected to a wireless access point (130), the computer program product comprising a computer program stored on a storage medium, the computer program comprising program code which, when executed in a system according to claim 7, causes the system to perform a method according one of claims 1 to 6.

## Patentansprüche

1. Verfahren zur verbesserten Handhabung von Notrufen einer Benutzerausrüstung (20), die mit einem Drahtlos-Zugangspunkt (130) verbunden ist, während sie einen Notruf (200) initiiert, wobei die Benutzerausrüstung (20) in der Lage ist, über den Drahtlos-Zugangspunkt (130), der mit einem externen Paketdatennetz (140) verbunden ist, mit einem mobilen Kommunikationsnetz (100) verbunden zu werden, wobei das Mobilkommunikationsnetz (100) ein Kernnetz (120) und ein Funkzugangsnetz (110) umfasst, wobei das Kernnetz (120) ein Mobile Enhanced Packet Core-Netz (122) ist und der Zugangspunkt (130) ein WiFi-Zugangspunkt ist, wobei das Verfahren einen ersten und einen zweiten Schritt umfasst:
- in dem ersten Schritt empfängt die Benutzerausrüstung (20) - während sie an das Mobilkommunikationsnetz (100) angebunden ist - eine Notruffähigkeitsinformation (201), wobei die Notruffähigkeitsinformation (201) angibt, dass das Mobilkommunikationsnetz (100) die Möglichkeit eines Notfalldienstes für die Benutzerausrüstung (20) bereitstellt, falls sie über den Drahtlos-Zugangspunkt (130) mit dem Kernnetz (120) verbunden ist,
- in dem zweiten Schritt, und falls ein Notruf (200) durch die Benutzerausrüstung (20) initiiert werden muss, während die Benutzerausrüstung (20) über den Drahtlos-Zugangspunkt (130) an das Mobilkommunikationsnetz (100) angebunden ist, initiiert die Benutzerausrüstung (20) den Notruf (200) über den Drahtlos-Zugangspunkt (130), falls die Notruffähigkeitsinformation (201) angibt, dass das Mobilkommunikationsnetz (100) die Möglichkeit eines Notfalldienstes für die Benutzerausrüstung (20) bereitstellt, während sie über den Drahtlos-Zugangspunkt (130) mit dem Kernnetz (120) verbunden ist,
wobei die Benutzerausrüstung - während sie den Notruf initiiert - über den Drahtlos-Zugangspunkt mit dem Mobilkommunikationsnetz unter Verwendung eines Datenübertragungstunnels zwischen der Benutzerausrüstung und einem Evolved Packet Data-Gateway, der Teil des Kernnetzes ist, verbunden ist,
und die Benutzerausrüstung (20) den Notruf (200) unter Verwendung eines Zugangsnetzes des Mobilkommunikationsnetzes (100) initiiert, das von einem Zugangsnetz, das den Drahtlos-Zugangspunkt (130) umfasst, verschieden ist, falls die Notruffähigkeitsinformation (201) angibt, dass das Mobilkommunikationsnetz (100) nicht in der Lage ist, die Möglichkeit eines Notfalldienstes für die Benutzerausrüstung (20), die über den Drahtlos-Zugangspunkt (130) mit dem Kernnetz (120) verbunden ist, bereitzustellen.

2. Verfahren nach einem der vorangehenden Ansprüche, wobei die Notruffähigkeitsinformation (201) während des Durchführens einer Anbindungsprozedur an die Benutzerausrüstung (20) übertragen werden, um an das Mobilkommunikationsnetz (100) angebunden zu werden, insbesondere während des Durchführens einer LTE-Anbindungsprozedur und insbesondere während des Durchführens der Anbindungsprozedur unter Einbeziehung des Evolved Packet Data-Gateways (123) und des Drahtlos-Zugangspunktes (130) oder eines anderen Drahtlos-Zugangspunktes.

3. Verfahren nach einem der vorangehenden Ansprüche, wobei die Notruffähigkeitsinformation (201) während des Initiierens des Datenübertragungstunnels (131) zwischen dem Drahtlos-Zugangspunkt (130) und dem Evolved Packet Data-Gateway (123) an die Benutzerausrüstung (20) übertragen werden.

4. Verfahren nach einem der vorangehenden Ansprüche, wobei die Notruffähigkeitsinformation (201) nach dem Durchführen der Anbindungsprozedur - insbesondere der Anbindungsprozedur unter Einbeziehung des Drahtlos-Zugangspunktes (130) oder eines anderen Drahtlos-Zugangspunktes - an die Benutzerausrüstung (20) übertragen wird, um an das Mobilkommunikationsnetz (100) angebunden zu werden, und/oder nach dem Initiieren des Datenübertragungstunnels (131) zwischen dem Drahtlos-Zugangspunkt (130) und dem Evolved Packet Data-Gateway (123) an die Benutzerausrüstung (20) übertragen wird.

5. Verfahren nach einem der vorangehenden Ansprüche, wobei der Datenübertragungstunnel (131) ein IP-Sec-Tunnel ist.

6. Verfahren nach einem der vorangehenden Ansprüche, wobei die Benutzerausrüstung (20) über den Drahtlos-Zugangspunkt (130) unter Verwendung eines IP-Transporttunnels (121) zwischen dem Evolved Packet Data-Gateway (123) und einem Paketdatennetz-Gateway (125), der Teil des Kernnetzes (120) ist, mit dem Mobilkommunikationsnetz (100) verbunden ist.

7. System zur verbesserten Handhabung von Notrufen einer Benutzerausrüstung (20), die mit einem Drahtlos-Zugangspunkt (130) verbunden ist, während sie einen Notruf (200) initiiert, wobei das System ein Mobilkommunikationsnetz (100), den Drahtlos-Zugangspunkt (130) und die Benutzerausrüstung (20) umfasst, wobei die Benutzerausrüstung (20) in der Lage ist, über den Drahtlos-Zugangspunkt (130), der mit einem externen Paketdatennetz (140) verbunden ist, mit dem Mobilkommunikationsnetz (100) verbunden zu werden, wobei das Mobilkommunikationsnetz (100) ein Kernnetz (120) und ein Funkzugangsnetz (110) umfasst, wobei das Kernnetz (120) ein Mobile Enhanced Packet Core-Netz (122) ist und der Zugangspunkt (130) ein WiFi-Zugangspunkt ist, wobei
- die Benutzerausrüstung (20) - während sie mit dem Mobilkommunikationsnetz (100) verbunden ist - eine Notruffähigkeitsinformation (201) empfängt, wobei die Notruffähigkeitsinformation (201) angibt, dass das Mobilkommunikationsnetz (100) die Möglichkeit eines Notfalldienstes für die Benutzerausrüstung (20) bereitstellt, falls sie über den Drahtlos-Zugangspunkt (130) mit dem Kernnetz (120) verbunden ist,
- falls ein Notruf (200) durch die Benutzerausrüstung (20) initiiert werden muss, während die Benutzerausrüstung (20) über den Drahtlos-Zugangspunkt (130) an das Mobilkommunikationsnetz (100) angebunden ist, die Benutzerausrüstung (20) den Notruf (200) über den Drahtlos-Zugangspunkt (130) initiiert, falls die Notruffähigkeitsinformation (201) angibt, dass das Mobilkommunikationsnetz (100) die Möglichkeit eines Notfalldienstes für die Benutzerausrüstung (20) bereitstellt, während sie über den Drahtlos-Zugangspunkt (130) mit dem Kernnetz (120) verbunden ist,
wobei die Benutzerausrüstung - während sie den Notruf initiiert - über den Drahtlos-Zugangspunkt mit dem Mobilkommunikationsnetz unter Verwendung eines Datenübertragungstunnels zwischen der Benutzerausrüstung und einem Evolved Packet Data-Gateway, der Teil des Kernnetzes ist, verbunden ist,
und die Benutzerausrüstung (20) den Notruf (200) unter Verwendung eines Zugangsnetzes des Mobilkommunikationsnetzes (100) initiiert, das von einem Zugangsnetz, das den Drahtlos-Zugangspunkt (130) umfasst, verschieden ist, falls die Notruffähigkeitsinformation (201) angibt, dass das Mobilkommunikationsnetz (100) nicht in der Lage ist, die Möglichkeit eines Notfalldienstes für die Benutzerausrüstung (20), die über den Drahtlos-Zugangspunkt (130) mit dem Kernnetz (120) verbunden ist, bereitzustellen.

8. Benutzerausrüstung (20) zur verbesserten Handhabung von Notrufen, wobei die Benutzerausrüstung (20) mit einem Drahtlos-Zugangspunkt (130) verbunden ist, während sie einen Notruf (200) initiiert, wobei die Benutzerausrüstung (20) dafür konfiguriert ist, ein Verfahren nach einem der Ansprüche 1 bis 6 durchzuführen.

9. Programm, umfassend einen computerlesbaren Programmcode, der, wenn er in einem System nach Anspruch 7 ausgeführt wird, das System veranlasst, ein Verfahren nach einem der Ansprüche 1 bis 6 durchzuführen.

10. Computerprogrammprodukt zur verbesserten Handhabung von Notrufen einer Benutzerausrüstung (20), die mit einem Drahtlos-Zugangspunkt (130) verbunden ist, wobei das Computerprogrammprodukt ein auf einem Speichermedium gespeichertes Computerprogramm umfasst, wobei das Computerprogramm Programmcode umfasst, der, wenn er in einem System nach Anspruch 7 ausgeführt wird, das System veranlasst, ein Verfahren nach einem der Ansprüche 1 bis 6 durchzuführen.

## Revendications

1. Procédé de traitement amélioré d'appels d'urgence d'un équipement utilisateur (20) connecté à un point d'accès sans fil (130) lors de l'initiation d'un appel d'urgence (200), dans lequel l'équipement utilisateur (20) peut être connecté à un réseau de communication mobile (100) par l'intermédiaire du point d'accès sans fil (130) qui est connecté à un réseau de données par paquets externe (140), le réseau de communication mobile (100) comprenant un réseau central (120) et un réseau d'accès radio (110), dans lequel le réseau central (120) est un réseau central de paquets amélioré mobile (122) et le point d'accès (130) est un point d'accès WiFi, dans lequel le procédé comprend une première et une seconde étape :
- dans la première étape, l'équipement utilisateur (20) - tandis qu'il est rattaché au réseau de communication mobile (100) - reçoit une information de capacité d'appel d'urgence (201), l'information de capacité d'appel d'urgence (201) indiquant que le réseau de communication mobile (100) fournit la possibilité d'un service d'urgence à l'équipement utilisateur (20) dans le cas où celui-ci est connecté au réseau central (120) par l'intermédiaire du point d'accès sans fil (130),
- dans la seconde étape et dans le cas où un appel d'urgence (200) doit être initié par l'équipement utilisateur (20) tandis que l'équipement utilisateur (20) est rattaché au réseau de communication mobile (100) par l'intermédiaire du point d'accès sans fil (130), l'équipement utilisateur (20) initie l'appel d'urgence (200) par l'intermédiaire du point d'accès sans fil (130) dans le cas où l'information de capacité d'appel d'urgence (201) indique que le réseau de communication mobile (100) fournit la possibilité d'un service d'urgence à l'équipement utilisateur (20) tandis qu'il est connecté au réseau central (120) par l'intermédiaire du point d'accès sans fil (130), dans lequel l'équipement utilisateur est connecté - tout en initiant l'appel d'urgence - par l'intermédiaire du point d'accès sans fil au réseau de communication mobile à l'aide d'un tunnel de transmission de données entre l'équipement utilisateur et une passerelle de données par paquets évoluée qui fait partie du réseau central, et l'équipement utilisateur (20) initie l'appel d'urgence (200) en utilisant un réseau d'accès du réseau de communication mobile (100) différent d'un réseau d'accès comprenant le point d'accès sans fil (130) au cas où l'information de capacité d'appel d'urgence (201) indique que le réseau de communication mobile (100) n'est pas en mesure de fournir la possibilité d'un service d'urgence à l'équipement utilisateur (20) qui est connecté au réseau central (120) par l'intermédiaire du point d'accès sans fil (130) .

2. Procédé selon l'une des revendications précédentes, dans lequel l'information de capacité d'appel d'urgence (201) est transmise à l'équipement utilisateur (20) lors de l'exécution d'une procédure de rattachement au réseau de communication mobile (100), en particulier lors de l'exécution d'une procédure de rattachement LTE et en particulier lors de l'exécution de la procédure de rattachement impliquant la passerelle de données par paquets évoluée (123) et le point d'accès sans fil (130) ou un point d'accès sans fil différent.

3. Procédé selon l'une des revendications précédentes, dans lequel l'information de capacité d'appel d'urgence (201) est transmise à l'équipement utilisateur (20) lors de l'initiation du tunnel de transmission de données (131) entre le point d'accès sans fil (130) et la passerelle de données par paquets évoluée (123).

4. Procédé selon l'une des revendications précédentes, dans lequel l'information de capacité d'appel d'urgence (201) est transmise à l'équipement utilisateur (20) après l'exécution de la procédure de rattachement - en particulier la procédure de rattachement impliquant le point d'accès sans fil (130) ou un point d'accès sans fil différent - afin d'être rattaché au réseau de communication mobile (100) et/ou après l'initiation du tunnel de transmission de données (131) entre le point d'accès sans fil (130) et la passerelle de transmission de données par paquets évoluée (123).

5. Procédé selon l'une des revendications précédentes, dans lequel le tunnel de transmission de données (131) est un tunnel IP Sec.

6. Procédé selon l'une des revendications précédentes, dans lequel l'équipement utilisateur (20) est connecté au réseau de communication mobile (100) par l'intermédiaire du point d'accès sans fil (130) à l'aide d'un tunnel de transport IP (121) entre la passerelle de données par paquets évoluée (123) et une passerelle de réseau de données par paquets (125) qui fait partie du réseau central (120).

7. Système permettant d'améliorer le traitement des appels d'urgence d'un équipement utilisateur (20) connecté à un point d'accès sans fil (130) lors de l'initiation d'un appel d'urgence (200), dans lequel le système comprend un réseau de communication mobile (100), le point d'accès sans fil (130) et l'équipement utilisateur (20), dans lequel l'équipement utilisateur (20) peut être connecté au réseau de communication mobile (100) par l'intermédiaire du point d'accès sans fil (130) qui est connecté à un réseau de données par paquets externe (140), le réseau de communication mobile (100) comprenant un réseau central (120) et un réseau d'accès radio (110), dans lequel le réseau central (120) est un réseau central de paquets amélioré mobile (122) et le point d'accès (130) est un point d'accès WiFi, dans lequel
- l'équipement utilisateur (20) - tandis qu'il est rattaché au réseau de communication mobile (100) - reçoit une information de capacité d'appel d'urgence (201), l'information de capacité d'appel d'urgence (201) indiquant que le réseau de communication mobile (100) fournit la possibilité d'un service d'urgence à l'équipement utilisateur (20) dans le cas où celui-ci est connecté au réseau central (120) par l'intermédiaire du point d'accès sans fil (130),
- dans le cas où un appel d'urgence (200) doit être initié par l'équipement utilisateur (20) tandis que l'équipement utilisateur (20) est rattaché au réseau de communication mobile (100) par l'intermédiaire du point d'accès sans fil (130), l'équipement utilisateur (20) initie l'appel d'urgence (200) par l'intermédiaire du point d'accès sans fil (130) dans le cas où l'information de capacité d'appel d'urgence (201) indique que le réseau de communication mobile (100) fournit la possibilité d'un service d'urgence à l'équipement utilisateur (20) tandis qu'il est connecté au réseau central (120) par l'intermédiaire du point d'accès sans fil (130), dans lequel l'équipement utilisateur est connecté - lorsqu'il initie l'appel d'urgence - par l'intermédiaire du point d'accès sans fil au réseau de communication mobile à l'aide d'un tunnel de transmission de données entre l'équipement utilisateur et une passerelle de données par paquets évoluée qui fait partie du réseau central, et l'équipement utilisateur (20) initie l'appel d'urgence (200) en utilisant un réseau d'accès du réseau de communication mobile (100) différent d'un réseau d'accès comprenant le point d'accès sans fil (130) au cas où l'information de capacité d'appel d'urgence (201) indique que le réseau de communication mobile (100) n'est pas en mesure de fournir la possibilité d'un service d'urgence à l'équipement utilisateur (20) qui est connecté au réseau central (120) par l'intermédiaire du point d'accès sans fil (130) .

8. Équipement utilisateur (20) pour un traitement amélioré des appels d'urgence, l'équipement utilisateur (20) étant connecté à un point d'accès sans fil (130) lors de l'initiation d'un appel d'urgence (200), l'équipement utilisateur (20) étant configuré pour appliquer un procédé selon l'une des revendications 1 à 6.

9. Programme comprenant un code de programme lisible par ordinateur qui, lorsqu'il est exécuté dans un système selon la revendication 7, amène le système à exécuter un procédé selon l'une des revendications 1 à 6.

10. Produit de programme informatique pour améliorer le traitement des appels d'urgence d'un équipement utilisateur (20) qui est connecté à un point d'accès sans fil (130), le produit de programme informatique comprenant un programme informatique stocké sur un support de stockage, le programme informatique comprenant un code de programme qui, lorsqu'il est exécuté dans un système selon la revendication 7, amène le système à exécuter un procédé selon l'une des revendications 1 à 6.
